# EUROPÄISCHE PATENTANMELDUNG

(11) **EP 0 736 721 A1**
(43) Veröffentlichungstag der Anmeldung: **09.10.1996**
(21) Anmeldenummer: 95116003.5
(22) Anmeldetag: 11.10.1995
(51) Int. Cl.: F16L 55/168, F16L 55/10, B65D 90/00

(54) **Vorrichtung zum Abdichten von Leckstellen an Gefässsystemen**

(30) Priorität: 08.04.1995 DE 19513405
(71) Anmelder: Winkler, Konrad, Dr.-Ing. habil., D-01187 Dresden (DE)
(72) Erfinder: Winkler, Konrad, Dr.-Ing. habil., D-01187 Dresden (DE)
(74) Vertreter: Heyner, Klaus, Dr.-Ing.

(57) **Zusammenfassung**

Die Erfindung bezieht sich auf die Minimierung von Umweltschäden, die durch plötzlichen Austritt von Flüssigkeiten, darunter auch von flüssigen Gefahrstoffen aus stationären und/oder mobilen Gefäßsystemen entstehen. Wesentliche Einsatzgebiete sind das Verschließen mindestens einer Auslaufstelle (Leck) (5) an fest installierten und/oder mobilen Gefäßsystemen.

Die Erfindung zeichnet sich dadurch aus, daß der Flüssigkeitsausfluß aus dem Leck (5) durch Einführen einer an die Leckgeometrie angepaßten von einem Kryomedium, vorzugsweise Flüssigstickstoff durchflossenen Kühlvorrichtung (4) in das Leck und/oder durch deren Aufsetzen auf das Leck sofort drastisch verringert und infolge Gefrierens der Flüssigkeit vom Kühlkörper aus nach kurzer Zeit völlig gestoppt wird.

## Beschreibung

Die Erfindung wird zum schnellen und sicheren Abdichten von Leckstellen an stationären und mobilen Gefäßsystemen unmittelbar am Ereignisort angewendet. Dabei soll in Notsituationen das Austreten von Flüssigkeiten darunter auch flüssigen Gefahrstoffen und die damit einhergehende Umweltbelastung bzw. Verseuchung in kürzester Zeit unterbunden werden.

Für Deutschland wurde ermittelt, daß z.B. bei Gefahrgutunfällen durchschnittlich 4800 l Gefahrstoff pro Gefahrstoffunfall auslaufen. Vom Ereigniszeitpunkt bis zum wirksamen Eingreifen der Feuerwehr- und Rettungskräfte tritt Gefahrgut unkontrolliert aus dem beschädigten Behälter aus.
Die Schadensbekämpfung erfolgt vor Ort durch die Feuerwehr mittels Dichttechnik gemäß Ausrüstung nach DIN 14555 vom Oktober 1990.
Danach gehören Holz- und Plastekelle, Leckdichtpaste, Bleiwolle und -band, Leckdichtkissen und Leckbandagen zur Ausrüstung des Gerätewagens zur Schadensbekämpfung insbesondere bei Gefahrgutunfällen.
Zur Sonderausstattung gehören Dichtlanze, Leckdrainkissen, Vakuum-Leckdrainkissen. Diese technischen Mittel wirken mechanisch oder das Luftkissenprinzip wird angewendet.

Wesentliche Nachteile sind u.a. ein hoher Bedienaufwand (bis zu 3 - 4 Bedienpersonen) und der Direktkontakt der Rettungskräfte mit auslaufender Flüssigkeit und ggf. Gefahrgut unmittelbar am Leck. Ein universeller Einsatz ist nicht möglich, da Dichtkörper gegen Flüssigkeiten und auch Gefahrstoffe eine unterschiedliche Resistenz besitzen und an den Leckstellen starkem mechanischen Verschleiß unterliegen.

Voraussetzung für den Einsatz der bekannten Mittel sind z.T. saubere Behälteroberflächen; die Dichtwirkung ist durch scharfe Rißkanten am Behälter und unregelmäßige Leckgeometrien teilweise eingeschränkt.

Aus dem Stand der Technik ist nach DE 36 18 387 A1 der Einsatz von Gefriermitteln für die Vereisung kontaminierter Böden und mit flüssigem Giftmüll gefüllter Fässer bekannt. Die Applizierung des Kältemittels erfolgt durch eine rohrförmig mit koaxialem Innenrohr und Außenrohr aufgebaute Hohllanze, bei der das Gefriermittel vom Innenraum des Innenrohres in den Ringraum zwischen Innen- und Außenrohr geleitet wird.
Infolge LN₂-Austritts aus der Hohllanze in das Behälterinnere, z.B. Fässer erfolgt eine Volumenvereisung des Behälterinhalts im Direktkontakt mit LN₂.

TRAPPMANN, W. und BIEDERBICK, M. stellen in der Firmenschrift Gas aktuell von Messer Griesheim 1989 das "Cryostop-Verfahren, Rohrverschluß durch Kälte" vor. Das Prinzip beruht auf der kontrollierten Anwendung von Flüssigstickstoff zum partiellen Gefrieren von ruhender Flüssigkeit in einer Rohrleitung. Der flüssige Rohrinhalt wird in einem begrenzten Bereich gefroren. Dazu wird eine dem Rohrdurchmesser angepaßte Manschette bzw. ein mit Ausschnitten versehener Blechkasten über das zu gefrierende Rohrstück geschoben und gegenüber dem Rohr abgedichtet. Danach wird das System mit Flüssigstickstoff gefüllt. Im Bereich des Kühlkastens bildet sich im Rohr ein Eispfropfen. Voraussetzungen für die erfolgreiche Anwendung des Verfahrens sind eine Füllung des Rohres mit Flüssigkeit an der zu gefrierenden Stelle, keine Strömung im Rohr sowie korrosions- und schweißnahtfreies Rohr. Ummantelte Rohre müssen abisoliert werden.

Ausgehend vom aufgezeigten Stand der Technik und vom unmittelbaren Bedarf der Schadensbekämpfung und -begrenzung im Zusammenhang mit auslaufenden Flüssigkeiten aus stationären und/oder mobilen Gefäßsystemen ist es Aufgabe der Erfindung, geeignet dimensionierte Kühlvorrichtungen zu entwickeln, die von einem Kryomedium so durchflossen werden, daß Lecks unterschiedlicher Geometrie an Gefäßsystemen schnell und wirksam verschlossen werden.
Dadurch werden die Substanzverluste drastisch verringert, entstehende Schäden oder Folgeschäden minimiert und der Einsatz von verunreinigend wirkenden Fremdsubstanzen vermieden.

Die Vorrichtungen sind transportabel zu gestalten und nach dem Baukastensystem aufzubauen. Sie sollen auch als Bordausrüstung für mobile Transporttechnik für Flüssigkeiten incl. flüssige Gefahrstoffe einsetzbar sein.

Die Vorrichtungen zum Leckverschluß haben eine Doppelfunktion zu erfüllen. Unmittelbar nach Anwendung/Einsatz der Vorrichtung ist der Flüssigkeitsauslauf aus dem Leck durch einen Stopfeffekt drastisch zu senken und durch den Kältemitteleinsatz ist der Flüssigkeitsauslauf schnell zu stoppen.

Die Vorrichtung soll einfach handhabbar sein. Einmannbedienung ist prinzipiell zu sichern. Das Bedienpersonal darf mit den auslaufenden Flüssigkeiten unmittelbar am Leck keinen Direktkontakt bekommen. Die Vorrichtung soll sicher und schnell am Ereignisort anwendbar sein.

Eine erfindungsgemäße Lösung dieser Aufgabe ist im Patentanspruch 1 angegeben. Weiterbildungen der Erfindung sind in den Unteransprüchen gekennzeichnet.

Das Wesen der Erfindung besteht darin, daß der Flüssigkeitsausfluß aus dem Leck eines Gefäßsystems durch teilweises Einführen eines in ihrer Form der Leckgeometrie angepaßten, von einem Kryomedium, vorzugsweise Flüssigstickstoff durchflossenen Kühlkörpers in das Leck und/oder durch deren Aufsetzen auf das Leck sofort drastisch verringert (Stopfvorgang) und infolge Gefrierens der Flüssigkeit vom Kühlkörper aus nach sehr kurzer Zeit völlig gestoppt wird (Dichtvorgang).

Der Stopfvorgang wird unterstützt durch einen im Rand- bzw. Auflagebereich des Kühlkörpers befestigten und auf den Leckrändern oder der Leckumgebungsfläche des defekten Behälters aufliegenden elastischen Isolier- und Dichtungskörpers.

Ausgehend von den zu erwartenden bzw. möglichen Leckgeometrien wurden folgende Kühlkörper entwickelt.

Bei einer lochartigen Gefäßöffnung werden doppelwandige, von einem Kryomedium, vorzugsweise Flüssigstickstoff LN₂ durchflossene, spitze Formkörper mit glatter Oberfläche vorzugsweise in Kegel- und/oder Pyramidenform mit variabler Grundfläche aus wärmeleitendem Material eingesetzt.

Unregelmäßig geformte Leckränder werden durch einen plattenförmigen elastischen und gegenüber den auslaufenden Flüssigkeiten in Verbindung mit der schnellen Unterkühlung resistenten Isolier- und Dichtungskörper, der von der Spitze des Kühlkörpers aus auf den äußeren Mantel des Kühlkörpers aufgezogen wird, sofort nach dem Ein- oder Ansetzen des Kühlkörpers in oder auf das Leck mechanisch abgedichtet, indem der Kühlkörper zu etwa der Hälfte, vorzugsweise zu 2/3 bis 3/4 seiner Höhe in das Leck eingeführt wird. Bei diesem Einführvorgang wird die übergestreifte elastische Isolier- und Dichtkörperplatte an den äußeren Bereich des Lecks gedrückt und auf diese Weise werden die geometrischen Unterschiede zwischen Kühlkörper und Leckform abgedeckt und abgedichtet, was in Verbindung mit dem wirkenden Kryomedium ein schnelles Zufrieren der Leckstelle sichert.

Die Kühlkörper selbst sind aus wärmeleitendem Material, beispielsweise Kupfer oder Edelstahl aufgebaut; sie sind resistent gegenüber Flüssigkeiten und auch Gefahrstoffen, mit denen sie in Kontakt kommen.
Die Kühlkörper bestehen in der bevorzugten Ausführungsform aus wärmeleitendem Material in Verbindung mit elastischen/flexiblen Isolier- und Dichtungsmaterialien, die gegenüber den Behälterinhalten (oder Flüssigkeiten) in Verbindung mit der schnellen Unterkühlung zumindest für die Einsatzdauer resistent sind.

Die verschiedenen Kühlkörperformen für die Leckabdichtung, die durch wärmeisolierte leicht handhabbare Verbindungs- und Distanzelemente zu einem Kühlsystem ergänzt sind, werden zusammen mit einem Kühlmittelcontainer mit Entnahmevorrichtung zu einem transportablen Geräteset nach dem Baukastenprinzip zusammengesetzt.

Die Anwendung der Erfindung führt zu folgenden wesentlichen Vorteilen.

Die Umweltschäden und die Kosten (z.B. Substanzverluste, Umweltsanierung), die durch plötzlichen Flüssigkeitsaustritt insbesondere von flüssigen Schadstoffen aus fest installierten Gefäßsystemen vorwiegend in der Chemischen Industrie und aus mobiler Transporttechnik auf Straße, Schiene und Wasser entstehen, werden drastisch gesenkt.

Durch die Erfindung werden plötzlich auftretende Lecks an Gefäßsystemen, aus denen Flüssigkeit, darunter auch flüssiger Gefahrstoff ausläuft, am Ereignisort schnell und sicher verschlossen.

Durch die Erfindung wird ein Gerätesystem bereitgestellt, das transportabel, nach dem Baukastensystem aufgebaut und bei Verwendung als Bordausrüstung für mobile Transporttechnik für Flüssigkeiten, vorzugsweise flüssige Gefahrstoffe im Bedarfsfalle durch den Fahrer/Beifahrer oder durch Einsatz- und Rettungskräfte, die am Ereignisort eintreffen, sofort einsetzbar ist.

Die Erfindung sichert durch geometrisch unterschiedlich gestaltete Kühlvorrichtungen aus resistenten Werkstoffen mit zusätzlichen Isolier- und Dichtungskörpern einen universellen Einsatz.

Durch die Erfindung wird eine einfach handhabbare technische Lösung für den sicheren und schnellen Leckverschluß an Gefäßsystemen für Flüssigkeiten, darunter auch flüssige Gefahrstoffe geschaffen, die prinzipiell durch Einmannbedienung nutzbar ist. Distanzhandling der Kühlvorrichtungen sichert dem Bedienpersonal, daß es unmittelbar am Leck zu keinem Direktkontakt mit der auslaufenden Flüssigkeit kommt.

Zur weiteren Erläuterung der Erfindung wird auf die Patentansprüche verwiesen.
Einzelheiten, Merkmale und Vorteile der Erfindung ergeben sich auch aus der nachfolgenden Beschreibung von Ausführungsbeispielen. In der zugehörigen Zeichnung zeigen:
- Fig. 1: die prinzipielle Anordnung des transportablen Gerätesystems zum Leckabdichten;
- Fig. 2: einen Kühlkörper für den Verschluß von lochförmigen Lecks in Kegelausführung;
- Fig. 3: Anordnung gemäß Fig. 2, dargestellt in der Draufsicht;
- Fig. 4: Anordnung gemäß Fig. 2, dargestellt im Schnitt A - B;
- Fig. 5: einen Kühlkörper für den Verschluß von Rissen,
- Fig. 6: Kühlkörper gemäß Fig. 5, dargestellt in der Seitenansicht/Vorderansicht;
- Fig. 7: Kühlkörper gemäß Fig. 5, dargestellt in der Draufsicht;
- Fig. 8: Kühlkörper gemäß Fig.5, dargestellt im Schnitt A -B;
- Fig. 9: Kühlkörper gemäß Fig. 5, dargestellt im Schnitt C -D.

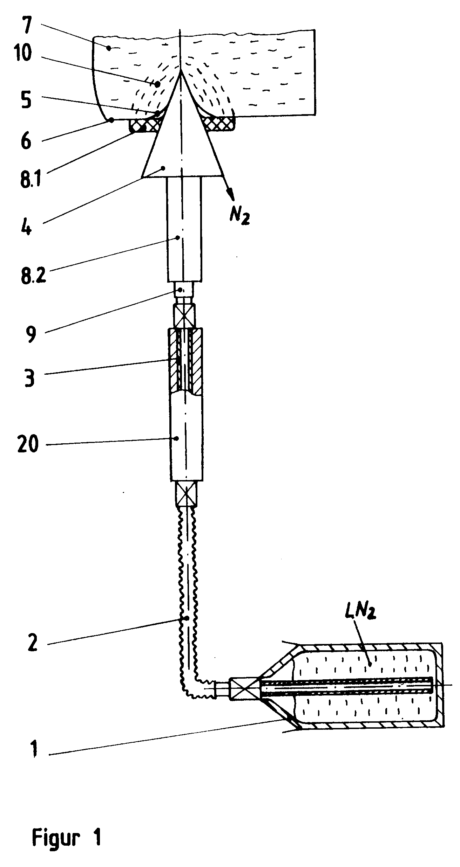

Das erfindungsgemäße Gerätesystem zum schnellen und sicheren Verschließen von Lecks in Gefäßsystemen, die Flüssigkeiten und darunter flüssige Gefahrstoffe enthalten, besteht nach Fig. 1 aus einem transportablen Kältemittelcontainer 1 mit Entnahmevorrichtung, an die ein Schlauch 2 und daran ein oder mehrere Distanzrohre mit Verbindungselementen 20 angeschlossen werden.

Die Distanzrohre 20 bestehen aus dem Einleitungsrohr 3 für das Kryomedium, vorzugsweise Flüssigstickstoff LN₂, das von einer Manipulierstange 9 umgeben und diese wiederum mit Isoliermaterial 8.2 ummantelt wird. Die außen isolierte Manipulierstange dient als Griff- und Bedienelement für den Kühlkörper 4, der außen eine elastische Manschette aus Isolier- und Dichtungsmaterial 8.1 trägt, die beim Einsetzen des hier kegelförmigen Kühlkörpers 4 in das Leck 5 eines Gefäßsystems, z.B. eines Flüssigkeits- und/oder Gefahrstofftanks, von außen so zwischen Kühlkörper und Leck gepreßt wird, daß auftretende Undichtigkeiten infolge unterschiedlicher Geometrie zwischen Kühlkörper 4 und Leck 5 sofort abgedichtet werden.

Das gilt prinzipiell sowohl für lochähnliche Lecks als auch für Risse. Bei Rissen wird der auf der Kühlkörperunterseite befestigte Rahmen aus elastischem Isolier-und Dichtungsmaterial 8.1 auf den Riß aufgesetzt. Beim lochförmigen Leck wird der Kühlkörper so geformt bzw. in einer definierten Geometrie für den Einsatz ausgewählt, daß er zur Hälfte und vorzugsweise zu 2/3 ... 3/4 seiner Höhe in das Leck hineinragt. Damit wird für die vom Kühlkörper 4 ausgehende Bildung des Eis- bzw. Dichtpfropfens 10 im Inneren des Gefäßsystems 6 die erforderliche Temperaturübertragung gesichert; weiterhin wird das Handling des Kühlkörpers verbessert, da die Einstecktiefe des Kühlkörpers in das Leck die mechanische Stabilität des Gerätegesamtsystem an dieser Wirkungsstelle entscheidend bestimmt.

Sobald das Leck durch Isolier- und Dichtungskörper 8.1 (Stopfvorgang) und den gebildeten und rasch wachsenden Dicht- bzw. Eispfropfen 10 am Kühlkörper 4 und damit an der Leckstelle 5 im Inneren des Gefäßsystems 6 abgedichtet und zugefroren ist (Dichtvorgang), wird das Gerätesystem am Kühlkörper im Leck selbsttragend. Der Flüssigstickstofffluß wird von diesem Augenblick an drastisch gedrosselt, ohne den Dichtpfropfen tauen zu lassen.

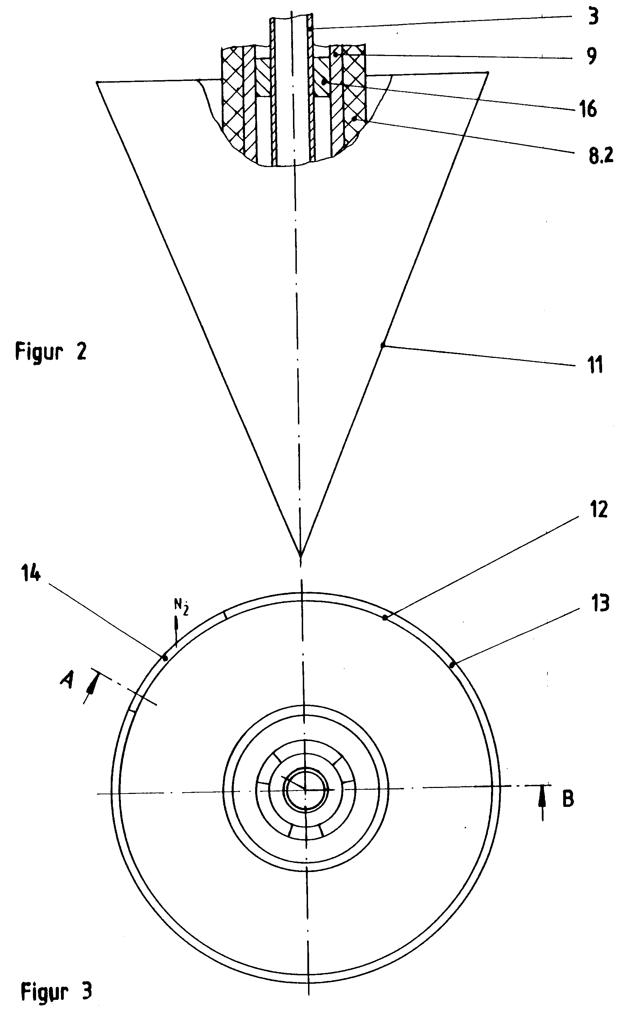

In Fig. 2 ist der äußere Formkörper 11 des Kühlkörper 4 mit dem Einleitungsrohr für LN₂ 3, die darüber angebrachte Manipulierstange 9 mit der äußeren Isolation 8.2 zu sehen. Zur Verringerung der Kälteverluste aus dem Einleitungsrohr für LN₂ 3, das z.B. aus Kupferrohr 10 × 1 besteht, werden Distanzelemente 16 zwischen Einleitungsrohr für LN₂ 3 und die Manipulierstange 9 angeordnet.

Aus Fig. 3 ist in der Draufsicht auf den beispielsweise als Hohlkegel ausgeführten Kühlkörper 4 der innere und äußere Formkörper 11 und 12 sowie die zwischen beiden Kegeln im konzentrischen Ringabstand auf der Grundfläche des Hohlkegels eingebrachte, mechanisch stabilisierende Dichtmasse 13 mit der Öffnung 14 zum Entweichen für den im Kühlkörper 4 gebildeten gasförmigen Stickstoff N₂ zu sehen.

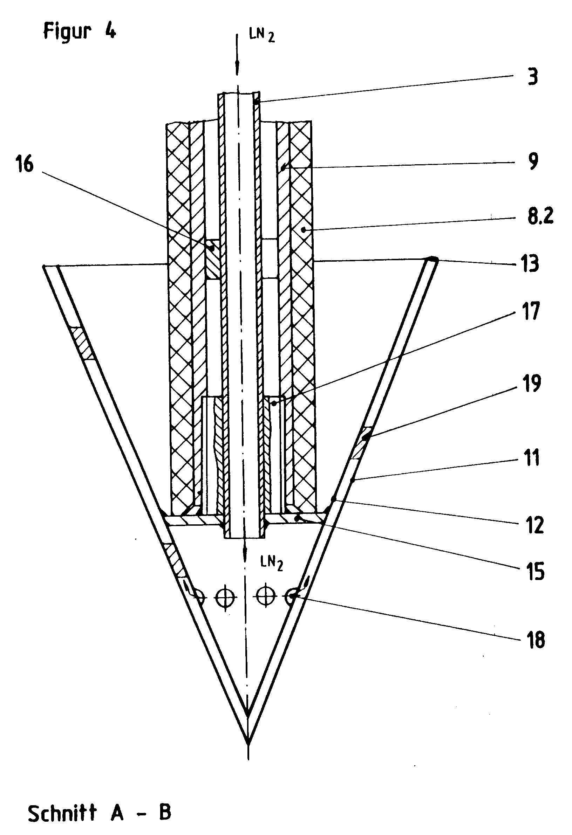

Fig. 4 zeigt im Schnitt A - B weitere Einzelheiten über den Aufbau des Kühlkörpers 4 mit glatter Oberfläche am Beispiel eines Kegels. Zwischen äußerem und Innerem Formkörper 11 und 12 aus gut wärmeleitendem Material, z.B. Kupfer sind spiralförmig befestigte Leitvorrichtungen 19 für die Verteilung des Flüssigstickstoffs auf das gesamte Volumen zwischen den Formkörpern 11 und 12 vorhanden, um nach der Verdampfung als gasförmiger Stickstoff N₂ aus der Öffnung 14 in der Dichtmasse 13, die den Hohlkegel an seinen Umfang verschließt, auszutreten. Diese Leitvorrichtungen 19 können beispielsweise als poröse Strangelemente ausgebildet werden.

In einer anderen Ausführungsform können die Leitvorrichtungen als spiralförmig verlaufende Leitbleche ausgebildet sein.

Das Einleitungsrohr für Flüssigstickstoff LN₂ 3 wird durch ein auf der Innenfläche des inneren Formkörpers 12 befestigtes Halteelement 15 in das Innere des inneren Formkörpers 12 hindurchgesteckt und an dem Halteelement 15 befestigt. Zur Verteilung des Flüssigstickstoffs LN₂ im Zwischenraum zwischen den Formkörpern 11 und 12 sind zwischen dem Ende des Einleitungsrohres für LN₂ 3 unterhalb des Halteelements 15 und der Spitze des inneren Formkörpers 12 Austrittsöffnungen 18 für den Flüssigstickstoff LN₂ über die gesamte Mantelfläche des inneren Formkörpers verteilt eingebracht.
Auf dem Halteelement 15 ist ein Gewindestutzen 17 befestigt, auf dem die Manipulierstange 9 aufgeschraubt wird.

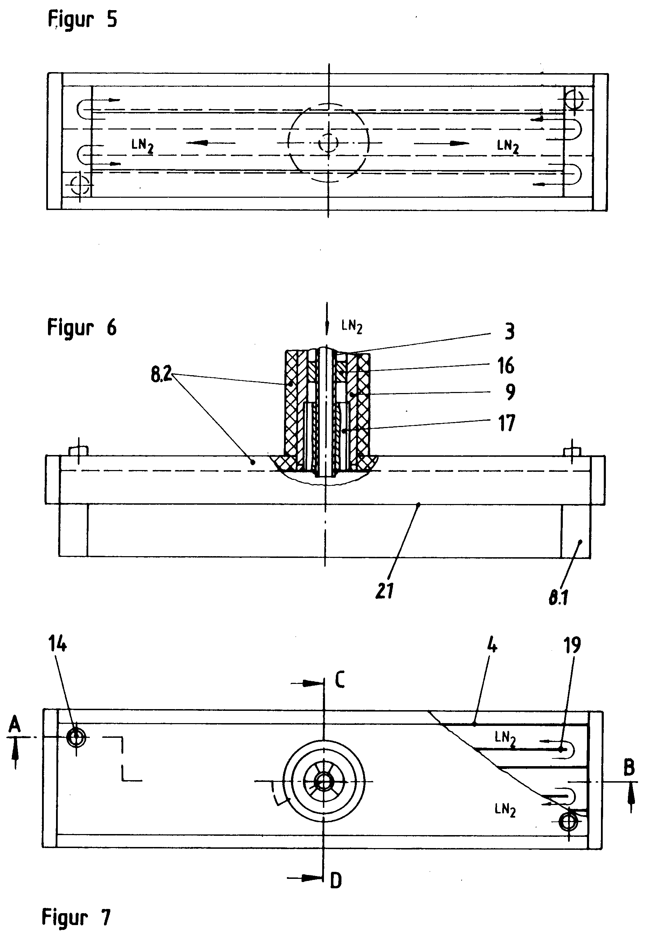

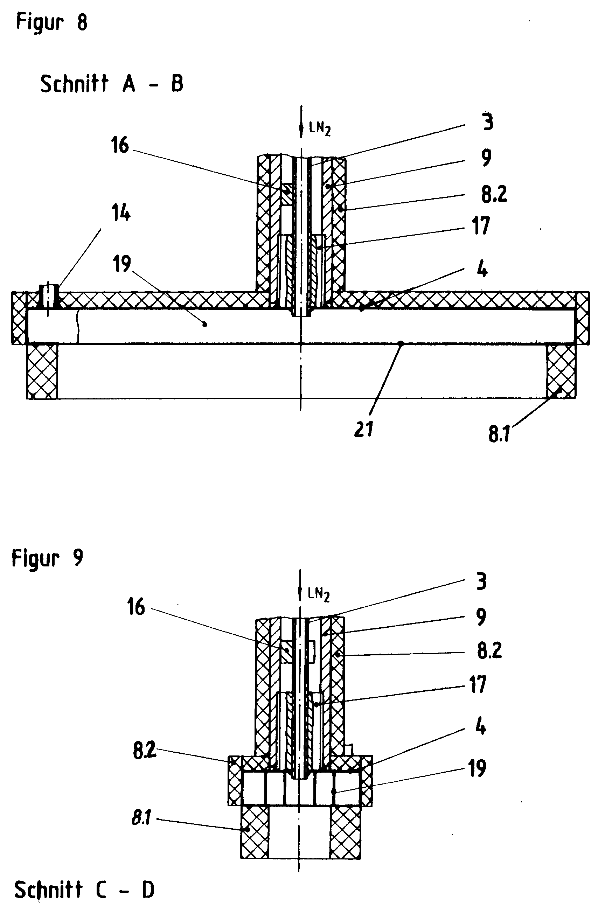

Die Fig. 5 - 9 zeigen Kühlkörper für das schnelle und sichere Abdichten eines Risses in einem Gefäßsystem, aus dem Flüssigkeit beispielsweise flüssiger Gefahrstoff ausläuft.
Der Aufbau des Grätesystems unterscheidet sich für verschiedene Leckformen lediglich in der Kühlkörpergeometrie. Während zum Abdichten lochförmiger Lecks doppelwandige Hohlkörper (hohle Formkörper) mit glatter Oberfläche angewendet werden, setzt man bei Rissen plattenförmige hohle Kühlkörper 4 ein.

Der Flüssigstickstoff LN₂ wird hier analog dem Kühlkörper für Löcher im Gefäßsystem durch das Einleitungsrohr 3 dem Kühlkörper 4 für Risse zugeführt. Die mit Isoliermaterial 8.2 ummantelte Manipulierstange 9 ist ebenfalls über das Einleitungsrohr für LN₂ 3 gesteckt. Zwischen beiden Rohren dienen Distanzelemente 16 zur Gewährleistung des erforderlichen Abstandes. Auf der Oberfläche des Kühlkörpers 4 ist ein Gewindestutzen 17 befestigt, auf den die Manipulierstange 9 aufgeschraubt ist. Gewindestutzen 17 und Manipulierstange 9 sind für alle Kühlkörper 4 einsetzbar. Das Einleitungsrohr für LN₂ 3 wird durch den Gewindestutzen 17 und die Deckplatte des Kühlkörpers 4 hindurchgeführt in das Innere des plattenförmigen hohlen Kühlkörpers.

Wie Fig. 5 in der Ansicht von unten und Fig. 7 in der Draufsicht zeigen, besitzt das Innere des plattenförmigen Kühlkörpers längs angeordnete Leitvorrichtungen für LN₂ 19, die den LN₂-Fluß von der zentralen Einleitungsstelle in das Innere des hohlen plattenförmigen Kühlkörpers in beide Längsrichtungen leiten und wechselseitig vor den Schmalseiten umlenken. Der gebildete gasförmige Stickstoff N₂ entweicht über die diagonal an zwei Ecken angeordneten Öffnungen 14.
Die Deckplatte und die Seitenflächen des plattenförmigen Kühlkörpers 4 werden mit elastischem Isoliermaterial 8.2 abgedeckt.
An der Unterseite 21 des Kühlkörpers 4 wird an den vier Außenkanten nach innen je eine Platte aus elastischem Isolier- und Dichtungsmaterial 8.1 so befestigt, daß an der Unterseite ein definierter Hohlraum entsteht, der auf den Riß gesetzt wird und infolge seiner elastischen Begrenzung die aus dem Gefäßsystem auslaufende Flüssigkeit zumindest teilweise aufnimmt und anschließend unter der Einwirkung der Kälte sofort zufriert und damit den Riß abdichtet. Die elastische Umrandung der unteren als Kühlplatte wirkenden Platte 21 erlaubt es, einen Riß in einem von einer planparallelen Unterlage abweichenden Untergrund sicher anzupassen und zu beherrschen.

Der beschriebene Kühlkörperaufbau kann natürlich auch mit weiteren Formkörpern, wie beispielsweise winkelförmig oder gekrümmt realisiert werden.

## Patentansprüche

1. Vorrichtung zum Abdichten von Leckstellen an Gefäßsystemen, die mit Flüssigkeiten, darunter auch flüssigen Gefahrstoffen gefüllt sind, bestehend aus
- einem in seiner äußeren Form der Leckgeometrie angepaßten, von einem Kryomedium durchflossenen Kühlkörper (4), der teilweise in das Leck eingeführt und/oder auf das Leck aufgesetzt wird, wobei der Kühlkörper zur Aufnahme des durchfließenden Kryomediums doppelwandig ausgeführt ist und ein Einleitungsrohr (3) für die Zuführung des Kryomediums in den Kühlkörper (4) besitzt, an dem über Distanzelemente (16) beabstandet die Manipulierstange (9) angreift, und zur Verteilung des Kryomediums zumindest über einen Teil der inneren Kontaktfläche des äußeren Formkörpers (11, 21) Leitvorrichtungen (19) vorhanden sind.
- einem im Rand- bzw. Auflagebereich des Kühlkörpers (4) befestigten und auf den Leckrändern (5) und/oder der Leckumgebungsfläche des defekten Gefäßes aufliegenden elastischen Isolier- und Dichtungskörper (8.1).

2. Vorrichtung nach Anspruch 1,
**dadurch gekennzeichnet**, daß für eine lochartige Gefäßöffnung (5) der Kühlkörper (4) in der Form eines doppelwandigen Hohlkörpers in Kegel- oder Pyramidenform variabler Grundfläche und glatter Oberfläche ausgebildet ist, wobei der vom Kryomedium durchströmte Hohlraum des Kühlkörpers (4) von einem inneren (12) und einem äußeren (11) Formkörper begrenzt und der konzentrische Abstand zwischen beiden auf ihrer Grundfläche mit einer mechanischen stabilisierenden Dichtmasse (13) unter Beibehaltung einer Öffnung (14) verschlossen ist.

3. Vorrichtung nach Anspruch 2,
**dadurch gekennzeichnet**, daß zur Abdichtung eines Lecks (5) mit unregelmäßigen Leckrändern zur Nutzung des Stopfeffekts ein von der Spitze des Kühlkörpers (4) aus auf den äußeren Mantel des Kühlkörpers aufgeschobener plattenförmiger elastischer Isolier- und Dichtungskörper (8.1) aufsitzt.

4. Vorrichtung nach Anspruch 3,
**dadurch gekennzeichnet**, daß der Isolier- und Dichtungskörper (8.1) als elastische Manschette aus porösem Isolier- und Dichtungsmaterial ausgebildet ist.

5. Vorrichtung nach einem der Ansprüche 2 bis 4,
**dadurch gekennzeichnet**, daß der abhängig von der Leckgeometrie (5) eingesetzte Kühlkörper (4) so dimensioniert ist, daß er zur Hälfte aber vorzugsweise zu etwa 2/3 bis 3/4 seiner Höhe in das Leck (5) hineinragt.

6. Vorrichtung nach einem der Ansprüche 2 bis 5,
**dadurch gekennzeichnet**, daß zwischen dem äußeren und inneren Formkörper (11, 12) aus gut wärmeleitendem Material spiralförmig angeordnete poröse oder feste Leitvorrichtungen (19) für die Verteilung des Kryomediums auf den gesamten Zwischenraum zwischen dem inneren Formkörper (12) und dem äußeren Formkörper (11) vorhanden sind, wobei poröse Leitvorrichtungen (19) in Form von Strangelementen und/oder feste Leitvorrichtungen in Form von Leitblechen vorgesehen sind.

7. Vorrichtung nach einem der Ansprüche 2 bis 6,
**dadurch gekennzeichnet**, daß das Einleitungsrohr (3) für die Zuführung des Kryomediums, gehalten von einem Halteelement (15), bis in das vom Halteelement (15) abgeschlossene spitze Teil des inneren Formkörpers (12) reicht und die Verbindung zum Hohlraum zwischen den Formkörpern (11, 12) übe Austrittsöffnungen (18) gegeben ist, die über die gesamte Mantelfläche des inneren Formkörpers (11) verteilt angeordnet sind.

8. Vorrichtung nach Anspruch 1,
**dadurch gekennzeichnet**, daß für eine rißförmige Gefäßöffnung (5) der Kühlkörper (4) plattenförmig ausgebildet ist, wobei der Plattenkörper flexibel an die Gefäßoberfläche anpaßbar ist und zur Ausnutzung des Stopfeffektes ein auf der Kühlkörperunterseite (21) befestigter Rahmen (8.1) aus elastischem Isolier- und Dichtungsmaterial vorhanden ist.

9. Vorrichtung nach Anspruch 8,
**dadurch gekennzeichnet**, daß im Inheren des plattenförmigen Kühlkörpers (4) längs angeordnete Leitvorrichtungen (19) vorgesehen sind, die den Fluß des Kryomediums von der Einleitstelle mittels des Einleitungsrohres (3) in beide Längsrichtungen leiten und wechselseitig vor den Schmalseiten umlenken.

10. Vorrichtung nach Anspruch 8,
**dadurch gekennzeichnet**, daß der auf der Kühlkörperunterseite befindliche Rahmen (8.1) aus elastischem Isolier- und Dichtungsmaterial aus vier Platten besteht, die an den Außenkanten des Kühlkörpers so befestigt sind, daß nach Aufsetzen auf das Leck (5) ein definierter Hohlraum entsteht.

11. Vorrichtung nach einem der Ansprüche 1 bis 10,
**dadurch gekennzeichnet**, daß die Kühlkörper (4) aus wärmeleitendem Material vorzugsweise Metallen oder Legierungen, z.B. Kupfer, Edelstahl bestehen, die gegenüber den auslaufenden Flüssigkeiten (7) resistent sind.

12. Vorrichtung nach einem der Ansprüche 1 bis 11,
**dadurch gekennzeichnet**, daß verschiedene Kühlkörperformen, die durch wärmeisolierte leicht handhabbare Verbindungs- und Distanzelemente (20) ergänzt sind, zusammen mit einem Kühlmittelcontainer (1) mit Entnahmevorrichtung, zu einem transportablen Geräteset nach dem Baukastenprinzip zusammengesetzt sind.

13. Vorrichtung nach Anspruch 8,
**dadurch gekennzeichnet**, daß das Gerätesystem, das aus Kühlmittelcontainer (1) mit Entnahmevorrichtung, Verbindungs- und Distanzelementen (20) sowie Kühlkörpern (4) besteht, als Bordausrüstung für mobile Gefäßsysteme, z.B. Tankfahrzeuge vorgesehen ist.
